**Europäisches Patentamt**

**European Patent Office**

**Office européen des brevets**

(19)

(11) Veröffentlichungsnummer : **0 470 063 A2**

## (12) EUROPÄISCHE PATENTANMELDUNG

(21) Anmeldenummer : **91890144.8**

(22) Anmeldetag : **05.07.91**

(51) Int. Cl.$^5$ : **C04B 35/54**

(30) Priorität : **01.08.90 AT 1621/90**

(43) Veröffentlichungstag der Anmeldung :
**05.02.92 Patentblatt 92/06**

(84) Benannte Vertragsstaaten :
**BE DE ES FR GB IT SE**

(71) Anmelder : **VOEST-ALPINE MACHINERY,
CONSTRUCTION & ENGINEERING
GESELLSCHAFT m.b.H.
Lunzerstrasse 78
A-4031 Linz (AT)**

(72) Erfinder : **Holuigue, C., Ing.
3808 Route du Plateau d'Assy
F-74190 le Fayet (FR)**
Erfinder : **Panholzer, Heinrich, Dipl.-Ing.
Glaserstrasse 2
A-4040 Linz (AT)**

(74) Vertreter : **Hübscher, Helmut, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz (AT)**

(54) **Verfahren und Vorrichtung zum Graphitieren von Kohlenstoffkörpern.**

(57)   Zum Graphitieren von Kohlenstoffkörpern (2) werden diese in einem Graphitierungsofen stirnseitig zu einem horizontalen Strang (1) zusammengespannt und in einer Graphitierungszone (6) durch Stromzufuhr erwärmt, bevor sie in einer Kühlzone (8) abgekühlt werden. Der Strang (1) wird dabei am Ofeneingang (11) durch ein Ansetzen einzelner Kohlenstoffkörper (2) laufend ergänzt und am Ofenausgang (12) durch ein Abnehmen der graphitierten Kohlenstoffkörper (2) laufend verkürzt. Um eine vorteilhafte, freitragende Strangführung sicherzustellen, werden die Kohlenstoffkörper (2) durch axiale Dübel (13) stirnseitig miteinander verbunden.

EP 0 470 063 A2

FIG.1

Die Erfindung bezieht sich auf ein Verfahren zum Graphitieren von Kohlenstoffkörpern, die zur Förderung durch einen Graphitierungsofen stirnseitig aneinandergesetzt und zu einem horizontalen Strang zusammengespannt werden, der in einer Graphitierungszone unter Schutzgasatmosphäre durch Stromzufuhr erwärmt und anschließend in einer Kühlzone gekühlt wird, wobei der Strang in Abhängigkeit von seiner Förderung durch den Graphitierungsofen am Ofeneingang durch ein Ansetzen einzelner Kohlenstoffkörper laufend ergänzt und am Ofenausgang durch ein Abnehmen einzelner Kohlenstoffkörper laufend verkürzt wird, sowie auf eine Vorrichtung zur Durchführung des Verfahrens.

Zum Graphitieren von vorgebrannten Kohlenstoffkörpern werden diese stirnseitig zu einem Strang zusammengespannt und mit Hilfe von elektrischem Strom, der durch einen Längsabschnitt des Stranges geleitet wird, auf die erforderliche Graphitierungstemperatur erwärmt. Um ein fortlaufendes Graphitierungsverfahren sicherzustellen, wird dabei der Strang in Förderschritten durch einen Graphitierungsofen gefördert, wobei nach jedem Förderschritt der Strang am Ofeneingang durch einen zu graphitierenden Kohlenstoffkörper ergänzt wird, während zugleich am Ofenausgang ein bereits graphitierter Kohlenstoffkörper vom Strang abgenommen wird. Für diese fortlaufende Graphitierung stirnseitig aneinandergesetzter Kohlenstoffkörper eignen sich insbesondere Graphitierungsöfen mit einer horizontalen Ofenachse, was jedoch eine entsprechende Abstützung des horizontal geführten Stranges erfordert. Zu diesem Zweck ist es bekannt, den Graphitierungsofen mit einer kohlenstoffhältigen Schüttung, beispielsweise aus Koks oder Ruß, zu füllen, die nicht nur die notwendige Unterstützung des Stranges aus Kohlenstoffkörpern mit sich bringt, sondern auch eine oxidierende Ofenatmosphäre vermeidet. Nachteilig bei einer solchen Schüttung ist allerdings, daß sie in der Graphitierungszone zwangsläufig mit den zu graphitierenden Kohlenstoffkörpern aufgewärmt werden muß, was den Energiebedarf vergrößert. Mit zunehmender Temperatur der kohlenstoffhältigen Schüttung verbessert sich außerdem deren elektrische Leitfähigkeit, so daß die Gefahr besteht, daß zum Strang parallele Kriechströme auftreten.

Zur Vermeidung dieser Nachteile wurde bereits vorgeschlagen (AT-PS 389 506), den Graphitierungsofen nicht mit einer kohlenstoffhältigen Schüttung zu füllen, sondern mit einer Schutzgasatmosphäre zu versehen und den Strang in einem für eine freitragende Strangführung ausreichenden Ausmaß axial einzuspannen. Mit dieser Maßnahme können zwar die Nachteile einer kohlenstoffhältigen Schüttung ausgeräumt werden, doch müssen erhebliche, von der Länge des Stranges abhängige Einspannkräfte für die freitragende Strangführung mit der Maßgabe aufgebracht werden, daß beim Ansetzen neuer Kohlenstoffkörper an den Strang bzw. beim Abnehmen bereits graphitierter Kohlenstoffkörper vom Strang diese Einspannkräfte erhalten bleiben, was den Konstruktionsaufwand zusätzlich vergrößert.

Der Erfindung liegt somit die Aufgabe zugrunde, ein Verfahren zum Graphitieren von Kohlenstoffkörpern der eingangs geschilderten Art so zu verbessern, daß die Vorteile der Graphitierung unter Schutzgasatmosphäre ausgenützt werden können, ohne den hiefür erforderlichen Aufwand in Kauf nehmen zu müssen.

Die Erfindung löst die gestellte Aufgabe dadurch, daß die Kohlenstoffkörper zur freitragenden Strangführung zumindest in einem Abschnitt des Graphitierungsofens beim Aneinandersetzen durch axiale Dübel oder Schraubbolzen stirnseitig miteinander verbunden werden.

Durch diese Maßnahme wird die freitragende Strangführung in vorteilhafter Weise unterstützt, weil durch die stirnseitige Verbindung der Kohlenstoffkörper durch axiale Dübel od. dgl. eine gegenseitige radiale Versetzung der aneinanderstoßenden Kohlenstoffkörper wirksam verhindert wird. Diese stirnseitige Verbindung der Kohlenstoffkörper im Strangbereich erlaubt nicht nur eine erhebliche Verminderung der für eine freitragende Strangführung erforderlichen axialen Einspannkräfte für den Strang, sondern schafft auch eine vorteilhafte Voraussetzung dafür, diese auf den Strang ausgeübten axialen Druckkräfte während des Ansetzens und Abnehmens von Kohlenstoffkörpern zumindest teilweise aufzuheben, insbesondere dann, wenn die freitragende Stranglänge sich auf wenige Kohlenstoffkörper beschränkt, wie das der Fall ist, wenn sich im Ofenbereich Zwischenabstützungen für den Strang ergeben, beispielsweise durch die Stromanschlüsse. Eine solche Strangabstützung kann auch durch eine Teilfüllung des Graphitierungsofens mit einer kohlenstoffhaltigen Schüttung erreicht werden, die eine erhebliche Verminderung der für eine freitragende Strangführung außerhalb der Schüttung erforderlichen axialen Einspannkräfte mit sich bringt, insbesondere bei einer stirnseitigen Verbindung der Kohlenstoffkörper. Da diese Schüttungen im bereich der Kühlzone des Graphitierungsofens vorgesehen werden, treten deren in der Graphitierungszone wirksamen Nachteile hinsichtlich der Miterwärmung mit den zu graphitierenden Kohlenstoffkörpern und hinsichtlich des Auftretens von strangparallelen Kriechströmen nicht auf. In der Graphitierungszone des Ofens bleibt ja die Schutzgasatmosphäre vorhanden.

Die Stromleitung durch den Strang wird durch die vorgesehenen Verbindungsdübel oder -bolzen nicht beeinträchtigt, weil die Stromführung in den äußeren Schichten zur Stromleitung ausreicht. Die Dübel oder Schraubbolzen sollen jedoch die Materialeinheit des Stranges nicht beeinträchtigen. Aus diesem Grunde empfiehlt es sich, die axialen Dübel oder Schraubbolzen zum stirnseitigen Verbinden der einzelnen Kohlenstoffkörper des Stranges aus kohlenstoffaserverstärktem Kohlenstoff herzustellen, der aufgrund seiner Faserverstärkung die notwendigen Festigkeitseigenschaften aufweist. Da die axiale Verbindung der Kohlenstoffkörper im allgemeinen im Bereich der späteren Halterungsausnehmungen der als Elektroden eingesetzten Kohlenstoffkörper liegt, ergibt sich durch die Bohrungen für die axiale Verbindung kein Materialverlust zufolge der Aufnahmebohrungen für die Dübel bzw. Schraubbolzen.

Bei vergleichsweise großen freitragenden Führungslängen für den Strang, wie sie vor allem bei Graphitierungsöfen mit einer durchgehenden Schutzgasatmosphäre vorliegen, kann neben der stirnseitigen Verbindung der Kohlenstoffkörper eine zusätzliche Strangabstützung im Bereich der freitragenden Strangführung während des Nachlassens der axialen Einspannkräfte vorgenommen werden, um ein unzulässiges Durchhängen des Stranges zu vermeiden. Es muß ja sichergestellt werden, daß beim Aufbringen der axialen Einspannkräfte die Kohlenstoffkörper selbst bei einem Durchhängen des Stranges wieder in die gestreckte Stranglage zurückgedrückt werden, was bei einem geringen Ausknicken der Kohlenstoffkörper aus der gestreckten Stranglage nach unten durchaus möglich ist. Ein Auseinanderfallen des Stranges ist durch die stirnseitige Verbindung der Kohlenstoffkörper ausgeschlossen. Für die Strangabstützung im Bereich der während der Strangförderung freitragenden Strangführung ist es somit nicht erforderlich, heb- und senkbare Abstützungen vorzusehen. Es genügt, wenn die Kohlenstoffkörper des Stranges im Bereich der freitragenden Strangführung auf wenigstens einer Abstützung aufgelegt werden können, die mit einem entsprechenden Führungsspiel unterhalb des freitragend geführten Stranges angeordnet wird, so daß beim Nachlassen der axialen Druckbelastung des Stranges die Kohlenstoffkörper nur geringfügig nach unten ausknicken, bis sie abgestützt werden. Das Führungsspiel ist ja lediglich erforderlich, um eine reibungsfreie Strangförderung sicherzustellen. Die Art und Anzahl der Abstützungen richtet sich naturgemäß nach der Anzahl und Größe der abzustützenden Kohlenstoffkörper und damit nach der Länge der freitragenden Strangführung, die im Hinblick auf die Stromführung vor allem zwischen den Stromanschlüssen vorzusehen sein wird. Die Stromanschlüsse können dabei vorteilhaft selbst zur Strangabstützung dienen.

Zur Durchführung des Verfahrens kann von einem Graphitierungsofen, der eine Graphitierungszone mit wenigstens zwei eine Strangabstützung ergebenden Stromanschlüssen für den Strang aus Kohlenstoffkörpern und eine in Strangdurchlaufrichtung anschließende Kühlzone bildet, sowie von einem Förderer für den Strang mit zwei dem Graphitierungsofen vorund nachgeordneten, den Strang zwischen sich axial einspannenden Spannköpfen ausgegangen werden, die in Richtung der Ofenachse verstellbar sind, wie dies bei Öfen mit einer durchgehend freitragenden Strangführung in einer Schutzgasatmosphäre bekannt ist. Werden die Kohlenstoffkörper des Stranges bei einem solchen Graphitierungsofen durch axiale Dübel oder Schraubbolzen stirnseitig miteinander verbunden, so kann aufgrund des damit erreichten Formschlusses eine radiale Versetzung der Kohlenstoffkörper gegeneinander auch bei geringeren axialen Einspannkräften mit Sicherheit ausgeschlossen werden, was eine leichtere und weniger aufwendige Ausbildung der Spannköpfe für die axiale Einspannung des Stranges mit sich bringt.

Zusätzlich zu diesen stirnseitigen Verbindungen können im Breich der freitragenden Strangführung, insbesondere im Bereich der Graphitierungszone, Abstützungen für den Strang mit einem Führungsspiel unterhalb des umgeknickten Stranges vorgesehen sein, um ein beim Entlasten des Stranges durch die Einspannköpfe zu erwartendes Durchhängen des Stranges der Kohlenstoffkörper nach unten auf ein Maß zu begrenzen, das es beim Aufbringen der Einspannkräfte wieder ermöglicht, die Kohlenstoffkörper in die gestreckte Stranglage zurückzudrücken.

Das erfindungsgemäße Verfahren wird im folgenden an Hand der Zeichnung näher erläutert. Es zeigen

Fig. 1 einen erfindungsgemäßen Graphitierungsofen in einem schematischen Längsschnitt,

Fig. 2 einen Querschnitt durch diesen Graphitierungsofen nach der Linie II-II der Fig. 1 in einem größeren Maßstab,

Fig. 3 einen Schnitt nach der Linie III-III der Fig. 1 in einem größeren Maßstab,

Fig. 4 eine stirnseitige Dübelverbindung zweier aneinanderstoßender Kohlenstoffkörper des Stranges in einer im Stoßbereich der Kohlenstoffkörper aufgerissenen Seitenansicht des Stranges und

Fig. 5 einen Querschnitt durch den Strang im Bereich einer Abstützung.

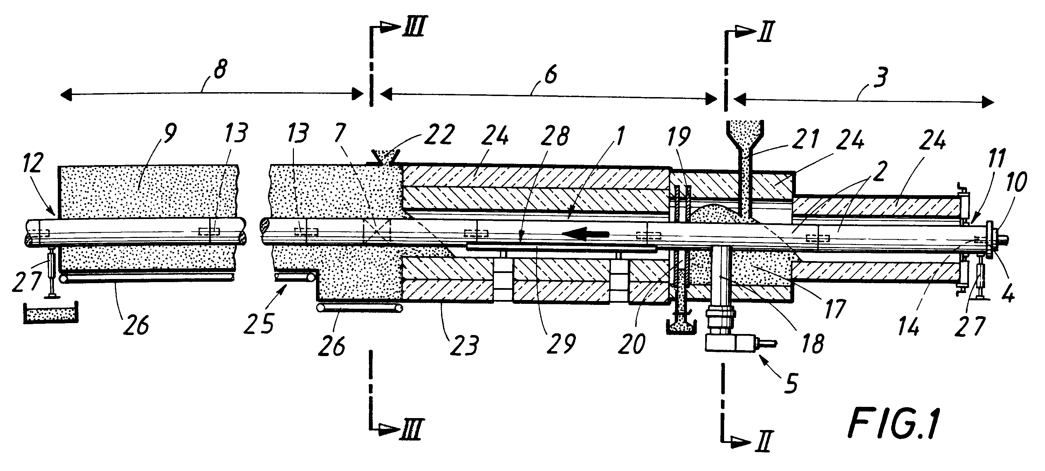

Der Graphitierungsofen bildet gemäß dem Ausführungsbeispiel nach der Fig. 1 für die zu graphitierenden, zu einem horizontalen Strang 1 axial zusammengespannten Kohlenstoffkörper 2 in Durchlaufrichtung des Stranges 1 nacheinander eine Vorwärmzone 3 zwischen zwei Stromanschlüssen 4 und 5, eine Graphitierungszone 6 zwischen den Stromanschlüssen 5 und 7 sowie eine Kühlzone 8. Während der Graphitierungsofen im Bereich der Vorwärmzone 3 und der Graphitierungszone 6 eine Schutzgasatmosphäre aufweist, ist im Bereich der Kühlzone 8 eine Füllung aus einer kohlenstoffhaltigen Schüttung 9, beispielsweise aus Koks oder Holzkohle, vorgesehen, die für eine entsprechende Abstützung des Stranges 1 sorgt.

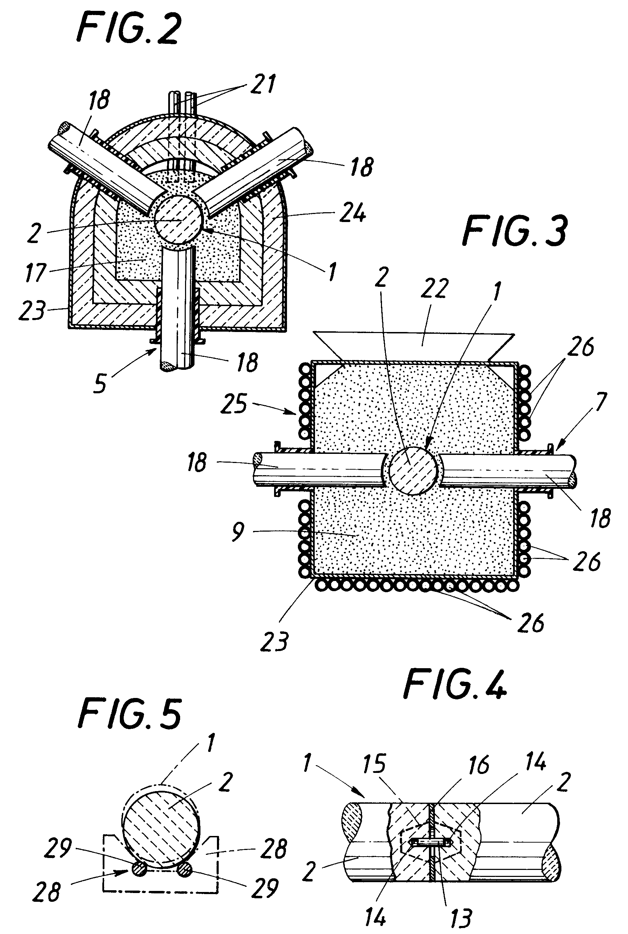

Die Kohlenstoffkörper 2 des Stranges 1 werden zur schrittweisen Förderung durch den Graphitierungsofen zwischen zwei dem Ofen vor- und nachgeordneten Spannköpfen axial eingespannt, von denen aus Übersichtlichkeitsgründen nur der eingangsseitige Spannkopf 10 angedeutet ist. Um zwischen den Förderschritten den Strang 1 am Ofeneingang 11 durch ein Ansetzen einzelner Kohlenstoffkörper 2 laufend zu ergänzen und am Ofenausgang 12 durch ein Abnehmen einzelner Kohlenstoffkörper laufend zu verkürzen, ohne die sonst für eine freitragende Strangführung zwischen den tragenden Stromanschlüssen erforderlichen axialen Druckkräfte aufrecht erhalten zu müssen, werden die Kohlenstoffkörper 2 des Stranges 1 stirnseitig durch Dübel 13 miteinander verbunden, wie dies in der Fig. 4 dargestellt ist. Diese stirnseitige Dübelverbindung der Kohlenstoffkörper 2 erfolgt jeweils zwischen den einzelnen Förderschritten beim Ansetzen eines neuen Kohlenstoffkörpers am Ofeneingang 11. Die Dübel 13, die durch Schraubbolzen ersetzt werden können, werden vorzugsweise aus kohlenfaserverstärktem Kohlenstoff hergestellt und in stirnseitige Sacklochbohrungen 14 der Kohlenstoffkörper 2 eingesetzt. Da im allgemeinen die graphitierten Kohlenstoffkörper 2 als Elektroden Verwendung finden, die stirnseitig mit Halterungsausnehmungen 15 versehen werden, wird durch das Vorsehen solcher Dübel 13 oder Schraubbolzen kein Materialverlust in Kauf genommen, weil ja diese Dübel oder Bolzen im Bereich der späteren Halterungsausnehmungen 15 liegen, wie dies aus der Fig. 4 hervorgeht. Die Stromführung außerhalb der Dübel 13 reicht für einen ausreichenden Stromübergang aus, insbesondere wenn zwischen den Stirnflächen der Kohlenstoffkörper 2 eine ringförmige Kontaktschicht 16 vorgesehen wird.

Während der Stromanschluß 4 im Bereich des Ofeneinganges 11 durch eine stirnseitige Kontaktplatte gebildet werden kann, die durch den Spannkopf 10 an den Strang 1 gepreßt wird, muß für die Stromanschlüsse 5 und 7 die Relativbewegung gegenüber dem Strang 1 berücksichtigt werden. Zu diesem Zweck wird im bereich der Stromanschlüsse 5 und 7 eine kohlenstoffhaltige Schüttung 17 voraesehen, die im bereich des Stromanschlusses 7 durch die Kühlzonenschüttung 9 gebildet werden kann. Diese auf einen Längsabschnitt des Stranges 1 begrenzte Schüttung 17 ergibt den erforderlichen Kontakt zwischen den Stromanschlußelektroden 18 und dem Strang 1, ohne die Förderbewegung des Stranges 1 gegenüber den ortsfesten Elektroden 18 zu beeinträchtigen. Die Schüttung 17 wird durch eine Trennwand 19 in Förderrichtung des Stranges 1 begrenzt, wobei das mit dem Strang 1 durch die Trennwand 19 austretende Schüttgut in einer anschließenden Kammer 20 gesammelt wird, um in der nachfolgenden Graphitierungszone 6 eine schüttungsfreie Schutzgasatmosphäre sicherzustellen. Die Schüttung 17 im bereich des Stromanschlusses 5 wird wie die Schüttung 9 im bereich der Kühlzone 8 über Zuführungsleitungen 21 bzw. 22 laufend ergänzt, um die austragsbedingten Schüttgutverluste auszugleichen.

Der durch den Graphitierungsofen geförderte Strang 1 wird im bereich der Vorwärmzone 3 zwischen den Stromanschlüssen 4 und 5 vorgewärmt und anschließend im bereich der Graphitierungszone 6 zwischen den Stromanschlüssen 5 und 7 auf die erforderliche Graphitierungstemperatur gebracht. Das Ofengehäuse 23 ist daher im bereich dieser Zonen mit einer entsprechenden Wärmeisolierung 24 versehen, um die Wärmeverluste zu verringern. Im bereich der Kühlzone 8 soll jedoch die Wärme über das Ofengehäuse 23 abgeführt werden, so daß in diesem bereich für eine Wärmeabfuhr über die Schüttung 9 und eine Gehäusekühlung 25 in Form von mit einem Kühlmittel durchströmten Kühlrohren 26 gesorgt wird, wie dies insbesondere der Fig. 3 entnommen werden kann.

Werden zum Ansetzen eines neu zu graphitierenden Kohlenstoffkörpers 2 bzw. zum Abnehmen eines bereits graphitierten Kohlenstoffkörpers 2 die Spannköpfe 10 vom Strang 1 entfernt, so wird der Strang 1 durch die Schüttung 9 in der Kühlzone 8, durch die Schüttung 17 im Bereich des Stromanschlusses 5 und außerhalb des Graphitierungsofens durch Auflagen 27 gehalten, die vor dem Nachlassen der axialen Druckkräfte angestellt wurden. Diese Strangabstützung reicht aufgrund der stirnseitigen Verbindung der Kohlenstoffkörper 2 durch die Dübel 13 oder Schraubbolzen in vielen Fällen aus, um den Durchhang des Stranges 1 in zulässigen Grenzen zu halten und die Kohlenstoffkörper 2 beim Aufbringen der axialen Einspannkräfte wieder in der vorgesehenen Strecklage des Stranges durch den Graphitierungsofen fördern zu können.

Ist die freitragende Strangführung zwischen den vorhandenen Abstützungen zu lang, um den Strangdurchhang in zulässigen Grenzen halten zu können, so werden zusätzliche Abstützungen 28 im Bereich der freitragenden Strangführung erforderlich, wenn zum Ansetzen bzw. Abnehmen der Kohlenstoffkörper die äußeren Einspannkräfte aufgehoben werden. Diese zusätzlichen Abstützungen 28 begrenzen den auftretenden Durchhang des Stranges im Bereich der freitragenden Strangführung auf ein zulässiges Maß, ohne die Strangförderung in diesem Bereich zu beeinträchtigen. Es können daher die Vorteile der Schutzgasatmosphäre -im Bereich der stromführenden Abschnitte des Stranges und die Vorteile der Schüttung 9 in der Kühlzone ausgenützt werden, ohne die Nachteile der Schutzgasatmosphäre im Bereich der Kühlzone bzw. der Schüttung im Bereich der Graphitierungszone in Kauf nehmen zu müssen.

Die Abstützung 28 kann gemäß dem Ausführungsbeispiel nach den Fig. 1 und 5 aus zwei strangparallelen, beidseits des Stranges 1 verlaufenden Holmen 29 bestehen, die mit einem Führungsspiel unterhalb der in der Fig. 5 strichpunktiert gezeichneten Strecklage des Stranges 1 verlaufen. Die Kohlenstoffkörper 2 des Stranges 1 finden daher beim Nachlassen der axialen Einspannkräfte auf den Holmen 29 eine seitenzentrierende Abstützung, die ein unzulässiges Durchhängen des Stranges verhindert, so daß beim erneuten axialen Einspannen des Stranges 1 die Kohlenstoffkörper 2 wieder in die gestreckte Stranglage zurückgedrückt werden, in der eine reibungsfreie Strangförderung sichergestellt wird. An Stelle der hohlen oder vollen Holme 29, die selbstverständlich entsprechend temperaturfest ausgebildet sein müssen und daher vorzugsweise aus gegebenenfalls kohlenstoffaserverstärktem Kohlenstoff bestehen, können auch Abstützungen 28 mit V-förmigen Aufnahmen für die Kohlenstoffkörper 2 vorgesehen sein, wie dies in der Fig. 5 strichpunktiert angedeutet ist. Aufgrund der stirnseitigen Verbindung der Kohlenstoffkörper ist jedoch eine gesonderte Seitenzentrierung über die Abstützung 28 nicht erforderlich, so daß auch ebene Abstützungen eingesetzt werden können, vor allem dann, wenn mit einem nicht genau koaxialen Aneinandersetzen der Kohlenstoffkörper gerechnet werden muß.

Die Erfindung ist selbstverständlich nicht auf das dargestellte Ausführungsbeispiel beschränkt, so könnte beispielsweise auch in der Kühlzone 8 eine Schutzgasatmosphäre vorgesehen sein, was eine entsprechende Vergrößerung der freitragenden Strangführung mit sich bringt, die aufgrund der Dübelverbindung der Kohlenstoffkörper 2 jedoch keine ins Gewicht fallende Vergrößerung des Konstruktionsaufwandes erfordert, insbesondere wenn für zusätzliche, mit einem Führungsspiel unterhalb des gestreckten Stranges vorgesehene Abstützungen 28 für den entspannten Strang 1 gesorgt wird.

## Patentansprüche

1. Verfahren zum Graphitieren von Kohlenstoffkörpern (2), die zur Förderung durch einen Graphitierungsofen stirnseitig aneinandergesetzt und zu einem horizontalen Strang (1) zusammengespannt werden, der in einer Graphitierungszone (6) unter Schutzgasatmosphäre durch Stromzufuhr erwärmt und anschließend in einer Kühlzone (8) gekühlt wird, wobei der Strang (1) in Abhängigkeit von seiner Förderung durch den Graphitierungsofen am Ofeneingang (11) durch ein Ansetzen einzelner Kohlenstoffkörper (2) laufend ergänzt und am Ofenausgang (12) durch ein Abnehmen einzelner Kohlenstoffkörper (2) laufend verkürzt wird, dadurch gekennzeichnet, daß die Kohlenstoffkörper zur freitragende Strangführung zumindest in einem Abschnitt (6) des Graphitierungsofens beim Aneinandersetzen durch axiale Dübel (13) oder Schraubbolzen stirnseitig miteinander verbunden werden.

2. Verfahren nach Anspruch 1, dadurch gekennzeichnet, daß die axiale Dübel (13) oder Schraubbolzen zum stirnseitigen Verbinden der einzelnen Kohlenstoffkörper (2) des Stranges (1) aus kohlenstoffaserverstärktem Kohlenstoff bestehen.

3. Verfahren nach Anspruch 1 oder 2, dadurch gekennzeichnet, daß die für die freitragende Strangförderung auf den Strang (1) ausgeübten axialen Druckkräften während des Ansetzens und Abnehmens von Kohlenstoffkörpern (2) zumindest teilweise aufgehoben werden.

4. Verfahren nach Anspruch 3, dadurch gekennzeichnet, daß die axialen Druckkräfte unter einer gleichzeitigen Strangabstützung wenigstens im Bereich der freitragenden Strangführung zumindest teilweise aufgehoben werden.

5. Verfahren nach Anspruch 3, dadurch gekennzeichnet, daß die Kohlenstoffkörper (2) des Stranges (1) im Bereich der freitragenden Strangführung auf wenigstens eine mit einem Führungsspiel unterhalb des freitragend geführten Stranges (1) angeordnete Abstützung (28) aufgelegt werden.

6. Vorrichtung zur Durchführung des Verfahrens nach einem der Ansprüche 1 bis 5, bestehend aus einem zumindest teilweise eine Schutzgasatmosphäre aufweisenden Graphitierungsofen, der eine Graphitierungszone (6) mit wenigstens zwei eine Strangabnützung ergebenden Stromanschlüssen (5,7) für den Strang (1) aus Kohlenstoffkörpern (2) und eine in Strangdurchlaufrichtung anschließende Kühlzone (8) bildet, und aus einem Förderer für den Strang mit zwei dem Graphitierungsofen vor- und nachgeordneten, den Strang (1) zwischen sich axial einspannenden Spannköpfen (10), die in Richtung der Ofenachse verstellbar sind, dadurch gekennzeichnet, daß die Kohlenstoffkörper (2) des Stranges (1) zur freitragenden Strangführung zumindest in einem Abschnitt (6) des Graphitierungsofens gegebenenfalls unter Zwischenlage einer elektrisch leitenden Schicht (16) durch axiale Dübel (13) oder Schraubbolzen stirnseitig miteinander verbunden sind.

7. Vorrichtung nach Anspruch 6, dadurch gekennzeichnet, daß im Bereich der freitragenden Strangführung wenigstens eine Abstützung (28) für den Strang (1) mit einem Führungsspiel unterhalb des ungeknickten Stranges (1) vorgesehen ist.

FIG.1

# FIG.2

# FIG.3

# FIG.5

# FIG.4